# EUROPEAN PATENT SPECIFICATION

(11) **EP 3 404 399 B1**
(45) Date of publication and mention of the grant of the patent: **03.03.2021**
(21) Application number: 18020203.8
(22) Date of filing: 11.05.2018
(51) Int. Cl.: G01N 1/31, G01N 1/36, G01N 35/00, B25J 15/00, G01N 35/04

(54) **AUTOMATIC MACHINE FOR THE EXTERNAL CLEANING OF HISTOLOGY CASSETTES EMBEDDED IN PARAFFIN**
AUTOMATISCHE MASCHINE ZUR EXTERNEN REINIGUNG VON IN PARAFFIN EINGEBETTETEN HISTOLOGIEKASSETTEN
MACHINE AUTOMATIQUE POUR LE NETTOYAGE EXTERNE DE CASSETTES D'HISTOLOGIE ENCASTRÉES DANS DE LA PARAFFINE

(30) Priority: 15.05.2017 IT 201700052482
(43) Date of publication of application: 21.11.2018
(73) Proprietor: Mecatron Automazione S.r.l., 64010 Colonnella (TE) (IT); CANOS Societ A Responsabilit Limitata Semplificata, 60035 Jesi (AN) (IT)
(72) Inventor: CINTI, Mario, 63100 Ascoli Piceno (IT)
(74) Representative: Primiceri, Maria Vittoria

(56) References cited:
- EP-A1- 2 913 042
- WO-A1-2012/005110
- JP-A- 2007 276 067

## Description

### Field of the invention

The present invention relates to the field of histology, in particular the field related to the embedding of histology cassettes in paraffin, and more specifically it relates to a fully automatic machine for the external cleaning of such cassettes from paraffin residue resulting from the embedding step thereof.

### Background of the invention

Histology studies the morphology of tissues and cells that compose them.

The tool primarily used in histology is the microscope, which allows the direct analysis of the tissues to be studied. To ensure that this analysis is possible, tissues should be processed and treated as follows:
- they should be treated in such a way as to prevent the decay thereof and allow their preservation for further analysis;
- they should be processed in order to dehydrate them and subsequently embedded in paraffin;
- they should be cut in very thin sections using microtomes;
- they should be placed on the slides;
- they should be colored in various ways by immersing them in staining jars.

In order to prevent the decay thereof, tissues to be subjected to microscopic analysis are treated through a fixation process. Fixation is made necessary since, once removed from the body, the tissues quickly lose their chemical and physical properties. Fixation delays these processes.

Another very important process for cell study purposes is the embedding, which is a task that is made after cassette with the biological tissue sample has undergone the processing cycle consisting in dehydration, clarification and infiltration of said sample. Said biological tissues, in fact, lose the consistency necessary for their maintenance; they are therefore inserted/embedded in more resistant materials, such as paraffin, which can act as a support.

A tray is used to carry out this operation, normally made of stainless steel, in which the piece to be analyzed is deposited, taken from the histology cassette the cover of which is removed. Said cassette, perforated on the bottom, is placed in the upper part of the tray.

As the end of this preparatory step, through a dispenser of paraffin made liquid and thus fluid at a temperature of about 60 °C, liquid paraffin is poured inside the histology cassette, which passes through the holes on the bottom and fills the steel tray where the piece to be embedded is contained, up to fill the inner part of the histology cassette.

After this operation, the cassette with the tray is brought to a cooling plate (normally with Peltier cells) to cool and solidify the liquid paraffin poured inside.

When paraffin becomes solid, the stainless tray is removed.

Therefore, there will be the cassette with the embedded solid paraffin, so that the cassette will become a single body with the paraffin in which the piece is embedded.

Cutting with the microtome requires considerable precision in the positioning of the cassette onto the clamp of the microtome, which is normally taken on the two long sides; therefore, the cassette needs to be cleaned externally by removing any paraffin edgings formed during the embedding.

In the state of the art the cleaning operation on the four outer sides of the histology cassette is done manually with tools such as cutters, steel blades or in any case with tools designed to remove the paraffin settled on the outer sides of the cassette.

The skill with which this operation is carried out involves that cleaning the cassette is not done with precision and therefore, said cassette may not be positioned correctly on the microtome clamp.

Document WO 2012/005110 discloses a method and apparatus for removing edgings formed during the embedding. However in the document there is not described the combination of a viewing system that defines position and orientation of histology cassettes; a handling system able to receive the exact positioning of the cassettes; a clamp provided with heatable grippers.

Therefore the problem of having an improved and efficient cleaning of histology cassettes still remains unsolved.

### Description of the invention

The object of the present invention is the automatic cleaning of histology cassettes from paraffin edgings formed during the embedding.

Another object of the present invention is to eliminate human intervention for cleaning said cassettes.

Another object of the present invention is to increase productivity in terms of number of cassettes that are cleaned.

Last but not least, an object of the present invention is to improve the quality of the clean cassette.

These and other objects are achieved with the present invention which relates to a fully automatic machine according to claim 1 for the external cleaning of histology cassettes from paraffin residues.

Further features and advantages of the invention will become more apparent from the description of a preferred but not exclusive embodiment of the machine object of the present patent application, illustrated only by way of non-limiting example in the drawings showing:

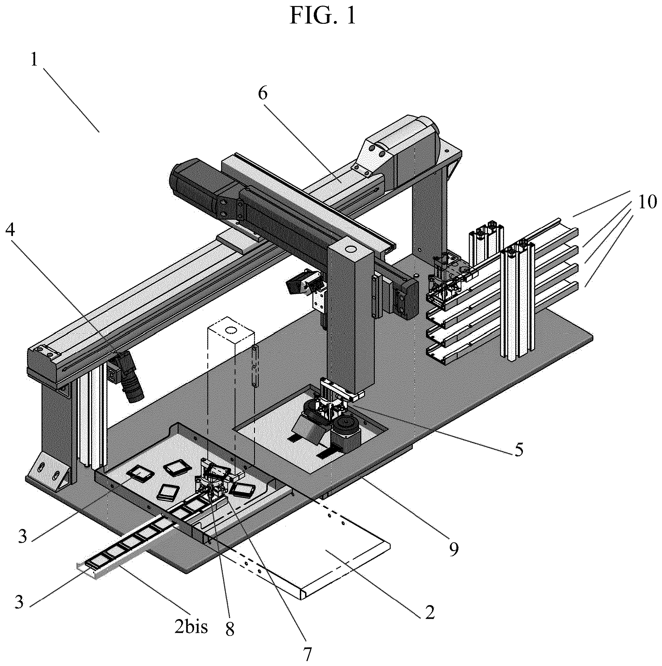

- Fig. 1 shows a three-dimensional view of a machine (1) consisting of:
   - a conveyor belt or tray (2) for inserting histology cassettes (3) in an unordered manner;
   - a conveyor belt (2bis) for inserting histology cassettes (3) put in order manner;
   - a viewing system (4);
   - a cleaning station (5);
   - a handling system or robot (6);
   - a clamp (7) provided with four grippers (8);
   - a drawer (9) for the removed chips or residues resulting from the cleaning of the histology cassette (3);
   - one or more horizontal outlet trays or slides (10) of the clean histology cassettes (3);
   - a viewing system (16) 1D-2D.

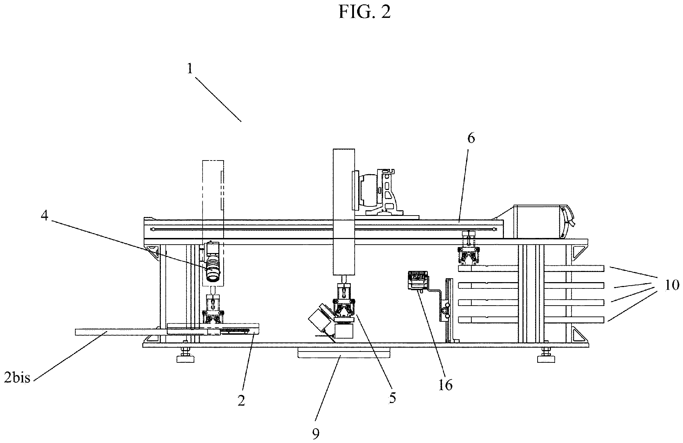

- Fig. 2 shows a side view of the machine in Fig. 1.

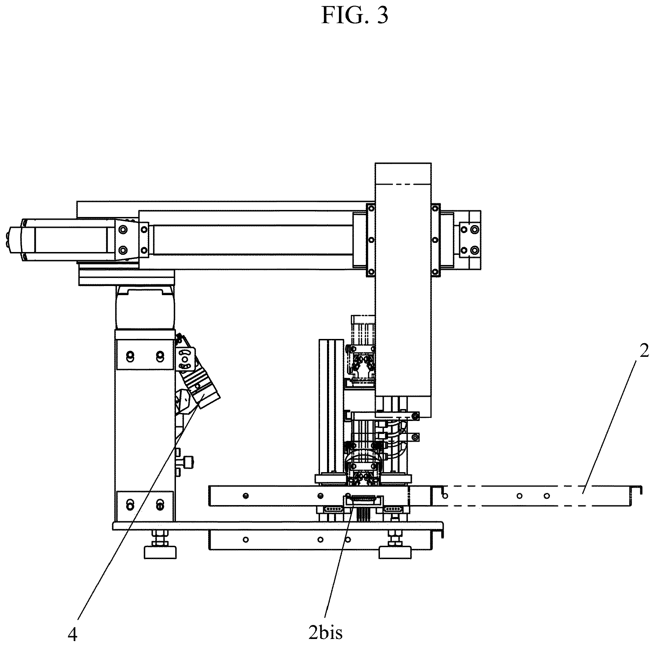

- Fig. 3 shows a further side view of the machine in Fig. 1.

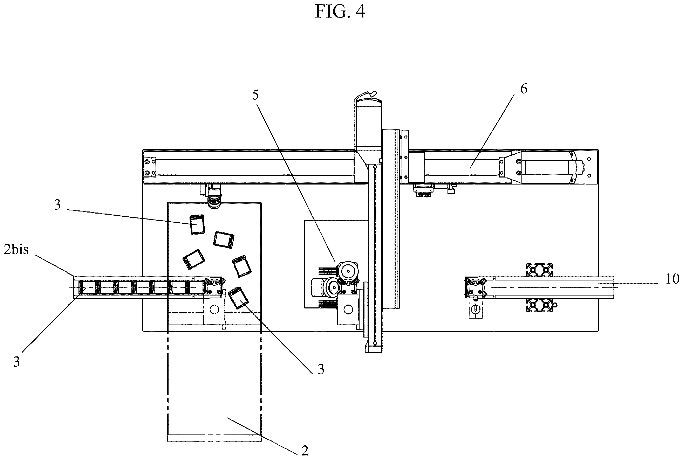

- Fig. 4 shows a top view of the machine in Fig. 1.

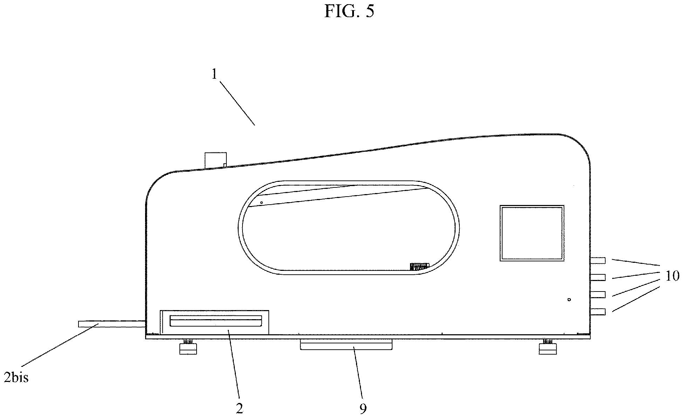

- Fig. 5 shows a side view of the machine (1) with the outer enclosure thereof.

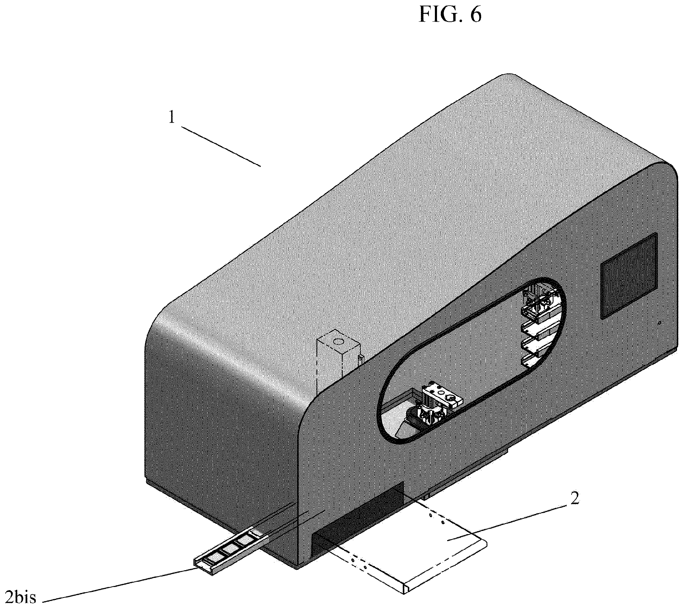

- Fig. 6 shows a three-dimensional view of the machine (1) in Fig. 5.

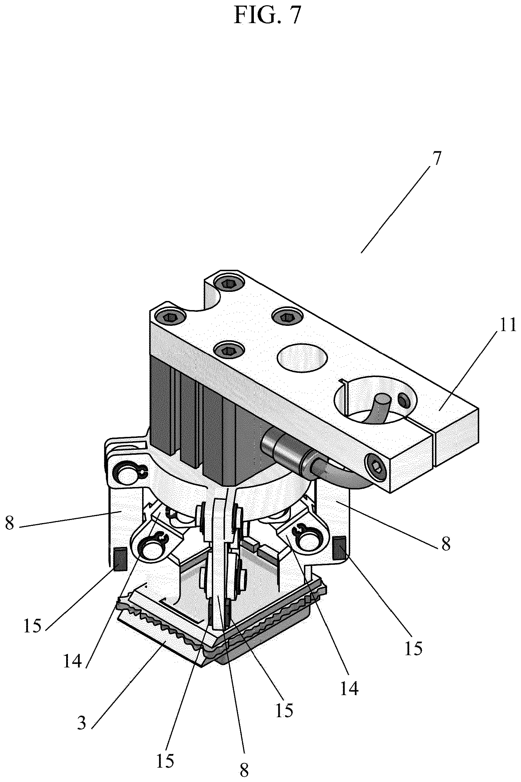

- Fig. 7 shows a three-dimensional view of the detail of clamp (7) where the following is visible:
   - an interface plate (11) of the handling system or robot (6);
   - the grippers (8) of the clamp (7) heatable by induction or by means of micro-resistances (15) and actuable by means of an actuator (12) and a pusher (13) which in turn acts on levers (14).

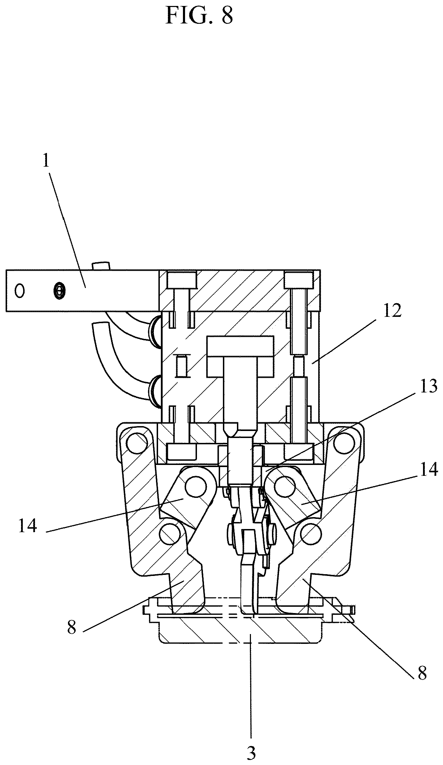

- Fig. 8 shows a side view of the clamp (7) with the grippers (8) in closed position.

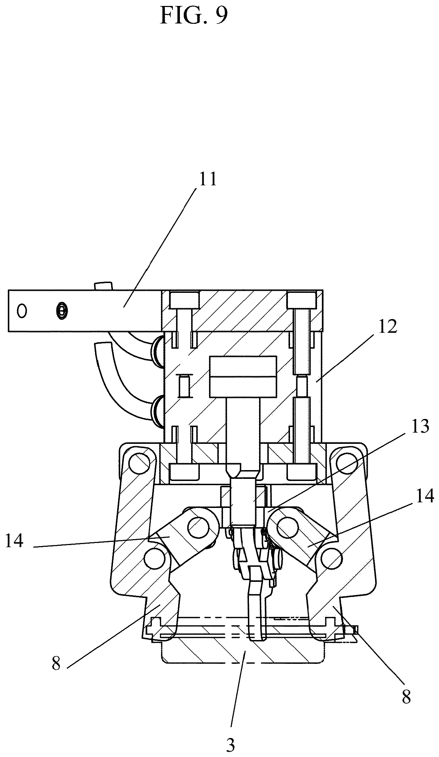

- Fig. 9 shows a side view of the clamp (7) with the grippers (8) shown in fully open position.

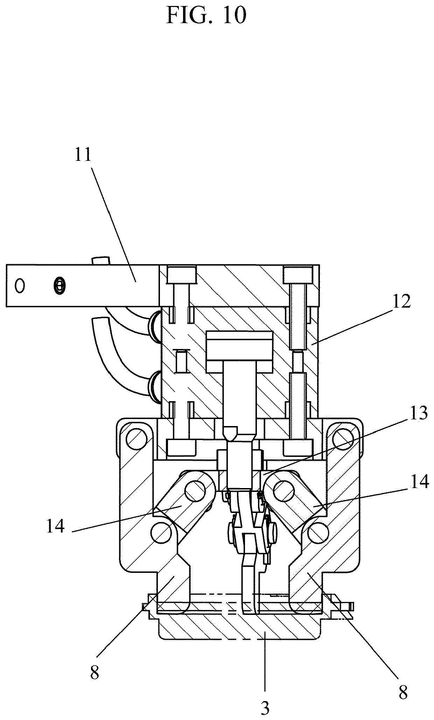

- Fig. 10 shows a side view of the clamp (7) blocking the cassette (3) on the four inner corners.

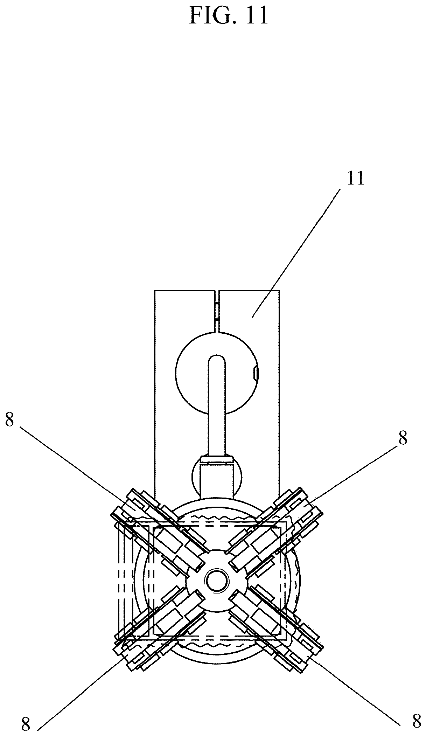

- Fig. 11 shows a top view of the gripper (7).

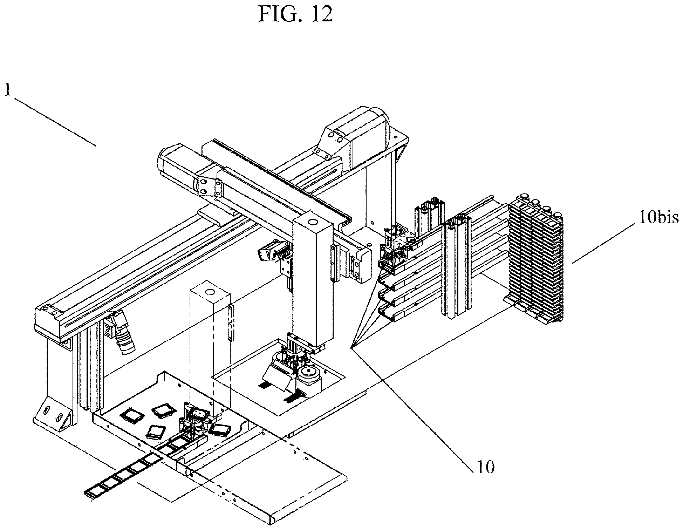

- Fig. 12 shows a three-dimensional view of a machine (1) in which alternatively to the horizontal outlet trays or slides (10) of the clean histology cassettes (3), vertical outlet trays or slides (10bis) can be used.

### Detailed description of the invention

The present invention relates to a fully automatic machine (1) for external cleaning of histology cassettes (3) from paraffin residue formed as a result of the embedding thereof.

In order to clean and thus remove paraffin residues from the outer sides of a histology cassette (3), the latter must be held by a system capable of keeping said cassette (3) firmly blocked and centered with certain references. Only by holding the cassette (3) still and centered one can accurately remove the external paraffin residues on all four sides of the same without damaging it and without damaging the inclined band where the numerical data and/or data matrix code of the patient or case are.

Said system for centering the cassette (3) consists of a self-centering clamp (7) with four grippers (8) which blocks the cassette (3) on the four inner corners where paraffin is, leaving unaltered the piece to be analyzed that has been embedded. Said four inner corners of the cassette (3) represent the only possible gripping point to leave the same free on all four outer sides and remove paraffin residues.

Inside the cassette (3) is the solid paraffin and in order to center and block said cassette (3) on the inner corners with the clamp (7) it is necessary to perforate the paraffin and open the four grippers (8).

Therefore the four grippers (8) of the clamp (7), after being heated to a temperature such as to melt the paraffin - and thus higher than 70 °C - but still within the range of 80-120 °C, must penetrate into the bottom of the cassette (3). The four heated grippers (8) open into paraffin without finding any resistance in the movement and block the cassette (3) internally on the corners and by the entire height thereof.

The heating of the four grippers (8) of the clamp (7) is done directly by applying micro-resistances (15) on the same, or indirectly by immersing the entire clamp (7) in an induction heating system.

An actuator (12) has the task of moving the clamp (7) and the four grippers (8) vertically to ensure that said grippers (8) arrive at the bottom of the cassette (3) and ensure a good grip; it may be electric or pneumatic. Said actuator (12), moving vertically, enters the cassette (3) by about 5 mm, arrives at the bottom and, by means of a pusher (13) and levers (14), open the grippers (8) to exert the clamping pressure on the four inner corners.

The cassette (3) thus retained allows having certain references and thus allows knowing the height where a tool located in the cleaning station (5) must remove the residual paraffin on each outer side of the cassette (3).

Known prior art histology cassettes are all standard versions, i.e. have a known size but nothing would prevent using cassettes having a size other than standard, adjusting the clamp (7) to the size of the cassette (3).

The inner dimension of the cassette (3) centered by the grippers (8) plus the thickness of the cassette (3) on each side provides the workload of the tool of the cleaning station (5).

In order to be cleaned, the cassette (3) blocked by the clamp (7) may be moved towards the tool of the cleaning station (5) or vice versa.

The removal of excess paraffin can be performed with tools which may be rotary, linear and vibrating.

Examples of tools are:
- small cutters or brushes, mounted on rotary units;
- hot or vibrating (ultrasound) blades which slide on the sides of the cassette (3) and dissolve and remove the excess paraffin;
- grinding tools;
- sundry tools.

Cleaning tools may be one or more than one depending on the desired cleaning cycle time to be obtained.

The cassettes (3) to be cleaned are introduced into the machine (1) by means of a conveyor belt or tray (2) on which they do not necessarily have to be placed in an orderly manner. Alternatively to the conveyor belt (2), a conveyor belt (2bis) may be used within which, instead, the cassettes (3) must be placed in the correct direction and ordered on special guides.

Both the tape (2) and the tape (2bis) bring the cassettes (3) to an identification point of the orientation thereof, which is identified by a viewing system (4) which defines the position and the orientation, thereby providing position coordinates (X, Y) which are then received by a robot or handling system (6) on which, by means of an interface plate (11) is the clamp (7).

The clamp (7), once received the orientation coordinates of the cassette (3) from the viewing system (4), brings its axis in central position with respect to the cassette (3) and is oriented to respect the position thereof. This system allows moving the clamp (7) vertically and being sure that the grippers (8) fit perfectly inside the cassette (3) to center and block it.

Moreover the viewing system (4), by detecting the perimeter image and thus knowing the dimensions of the cassette (3), knows the exact location where the tool of the cleaning station (5) must be placed to remove the excess paraffin.

Therefore, the viewing system (4) provides:
- the handling system or robot (6) with the coordinates to move and rotate to pick up the cassette (3) according to its position and block it by means of the clamp (7);
- the cleaning station (5) with the heights at which the cassette (3) must be brought to clean the four sides.

In order to calculate the heights, the viewing system (4) defines from the image the center of the cassette (3) referred to the four corners; the center of the cassette (3) detected by the viewing system (4) thus becomes the vertical axis on which the clamp (7) must be placed.

Centering the cassette (3) can be done in a more approximate manner, without viewing system (4), thus with simpler but less efficient methods, feeding the cassettes (3) on a single conveyor belt (2bis), leading one of the four sides of the cassette (3) to mechanical stop; with this solution, having a position error due to the size of the paraffin edging, it is necessary to have a quite orderly feeding of cassettes (3) to be cleaned and a clamp (7) with greater opening tolerances to ensure that the grippers (8) are located within the cassette (3).

In order to allow a good working autonomy of the machine (1), multiple cassettes (3) may be loaded on the belt (2), by increasing the size thereof or using multiple belts. The belt (2) will be introduced into the machine (1), the locations of the cassettes (3) will be read by the viewing system (4) and they will be picked up one at a time by the handling system or robot (6) to be cleaned.

The identification code located on the inclined side of the cassettes (3) that have been cleaned and that are in output from the machine (1) is read by a viewing system (16) 1D-2D. The reading of said code allows sorting and dividing the cleaned cassettes (3) on various outlet slides or trays (10)/(10bis) according to the type of analysis to be carried out or the departments concerned.

The various outlet slides or trays of the clean cassettes (3) can beplaced horizontally (visible with number 10) or vertically (visible with number 10bis) and may have different shapes depending on the storage requirements.

The cassette (3) trays, in order to stabilize their consistency and ensure that the paraffin remains solid, can be cooled with Peltier cells or placed in small refrigerators.

These operations must be managed by a PC connected to the cleaning machine (1).

The materials and the dimensions of the invention as described above, illustrated in the accompanying drawings and claimed hereinafter, may be any according to the requirements.

## Claims

1. Automatic machine (1) for the external cleaning of histology cassettes (3) embedded in paraffin, comprising:
- a first conveyor belt or tray (2) for inserting histology cassettes (3) in an unordered manner;
- a second conveyor belt (2bis) for inserting histology cassettes (3) put in order onto guides;
- a first viewing system (4) that is configured to:
- define the position and orientation of the histology cassette (3) inserted in the automatic machine (1) by the first conveyor belt or tray (2) or by the second conveyor belt (2bis); and
- detect the perimeter image and therefore knows the dimensions of the cassettes (3);
- a cleaning station (5) where one or more tools are arranged, the one or more tools capable of removing the residual paraffin present on each outer side of the cassette (3);
- a handling system or robot (6) configurated to receive from the viewing system (4) the coordinates for moving and rotating to pick up the cassettes (3) according to its position;
- a clamp (7) located on the handling system or robot (6) by means of an interface plate (11) and provided with four heatable grippers (8), wherein the grippers (8) are heatable by means of micro-resistances (15) applied on the grippers (8) and wherein the clamp (7) is actuable by means of an actuator (12) and a pusher (13) which in turn acts on levers (14);
- a drawer (9) for the residues resulting from the cleaning of the histology cassette (3);
- one or more horizontal (10) or vertical (10bis) outlet trays or slides of the clean histology cassettes (3);
- a second viewing system (16) 1D-2D capable of:
- reading the identification code placed on the inclined side of the clean histology cassettes (3) exiting the machine (1); and
- putting in order and dividing said clean cassettes (3) on the one or more horizontal (10) or vertical (10bis) outlet trays or slides.

2. Automatic machine (1) for the external cleaning of histology cassettes embedded in paraffin according to claim 1, wherein the clamp (7), is configured to, once having received the orientation coordinates of the cassette (3) from the viewing system (4), bring its axis in central position with respect to the cassette (3) and is oriented to respect the position thereof.

## Patentansprüche

1. Automatische Maschine (1) zur Außenreinigung von in Paraffin eingebetteten histologischen Kassetten (3), umfassend:
- ein erstes Förderband oder eine erste Schale (2) zum ungeordneten Einlegen von histologischen Kassetten (3);
- ein zweites Förderband (2bis) zum Einlegen von histologischen Kassetten (3), die in der Reihenfolge auf Führungen angeordnet sind;
- ein erstes Anzeigesystem (4), das konfiguriert ist für:
- die Position und Ausrichtung der in die automatische Maschine (1) eingelegten histologischen Kassette (3) mit Hilfe des ersten Förderbandes oder Schale (2) oder mit Hilfe des zweiten Förderbandes (2bis) festlegen; und
- das Umfangsbild und daher die Abmessungen der Kassetten (3) erkennen;
- eine Reinigungsstation (5), in der ein oder mehrere Werkzeuge angeordnet sind, wobei ein oder mehrere Werkzeuge in der Lage sind, auf jeder Außenseite der Kassette (3) vorhandene Paraffinreste zu entfernen;
- ein Handhabungssystem oder ein Roboter (6), der konfiguriert ist, um vom Anzeigesystem (4) die Koordinaten zum Bewegen, Drehen und Greifen der Kassetten (3) gemäß ihrer Position zu empfangen;
- eine Greifvorrichtung (7), die mittels einer Schnittstellenplatte (11) am Handhabungssystem oder Roboter (6) angeordnet und mit vier beheizbaren Zangen (8) versehen ist, wobei die Zangen (8) mittels Mikrowiderstände (15) beheizt werden können, die an der Zange (8) angebracht sind und wobei die Greifvorrichtung (7) mittels eines Aktuators (12) und eines Druckelements (13) betätigt werden kann, das wiederum auf Hebel (14) reagiert;
- eine Schublade (9) für die Reste, die bei der Reinigung der histologischen Kassette (3) entstehen;
- ein oder mehrere horizontale (10) oder vertikale (10bis) Austrittsschalen- oder Rutschen der sauberen histologischen Kassetten (3);
- ein zweites 1D-2D-Anzeigesystem (16), das in der Lage ist zur:
- den Identifikationscode auf der geneigten Seite der sauberen histologischen Kassetten (3) zu lesen, die aus der Maschine (1) kommen; und
- die sauberen Kassetten (3) auf einem oder mehreren horizontalen (10) oder vertikalen (10bis) Austrittsschalen oder Rutschen anordnen und verteilen.

2. Automatische Maschine (1) zur Außenreinigung von in Paraffin eingetauchten histologischen Kassetten nach Anspruch 1, wobei die Greifvorrichtung (7) ist konfiguriert zur, nachdem die Orientierungskoordinaten der Kassette (3) vom Anzeigesystem (4) empfangen wurden, deren Achse sich in einer zentralen Position in Bezug auf die Kassette (3) zu tragen, und mit Bezug auf ihre Position ausgerichtet ist.

## Revendications

1. Machine automatique (1) pour le nettoyage externe de cassettes histologiques (3), noyées dans de la paraffine, comprenant:
- une première bande transporteuse ou plateau (2) pour l'insertion de cassettes histologiques (3) de manière non ordonnée;
- une deuxième bande transporteuse (2bis) pour insérer des cassettes histologiques (3) disposées dans l'ordre sur des guides;
- un premier système d'affichage (4) qui est configuré pour:
- définir la position et l'orientation de la cassette histologique (3) insérée dans la machine automatique (1) au moyen de la première bande transporteuse ou plateau (2) ou au moyen de la deuxième bande transporteuse (2bis); et
- détecter l'image périmétrique et donc connaître les dimensions des cassettes (3);
- un poste de nettoyage (5) dans lequel un ou plusieurs outils sont disposés, un ou plusieurs outils pouvant éliminer la paraffine résiduelle présente de chaque côté externe de la cassette (3) ;
- un système de manipulation ou robot (6) configuré pour recevoir du système d'affichage (4) les coordonnées de déplacement, de rotation et de saisie des cassettes (3) en fonction de sa position;
- un dispositif de préhension (7) situé sur le système de manipulation ou le robot (6) au moyen d'une plaque d'interface (11) et pourvu de quatre pinces chauffantes (8), où les pinces (8) peuvent être chauffées au moyen de micro-résistances (15) appliquées sur la pince (8) et dans lesquelles le dispositif de préhension (7) peut être actionné au moyen d'un actionneur (12) et d'un élément de poussée (13), qui réagissent à leur tour sur des leviers (14) ;
- un tiroir (9) pour les résidus résultant du nettoyage de la cassette histologique (3);
- un ou plusieurs plateaux ou éléments coulissants de sortie horizontaux (10) ou verticaux (10bis) des cassettes histologiques propres (3);
- un deuxième système d'affichage (16) 1D-2D capable de:
- lire le code d'identification placé sur le côté incliné des cassettes histologiques propres (3) sortant de la machine (1) ; est
- disposer et répartir lesdites cassettes propres (3) sur un ou plusieurs plateaux ou éléments coulissants de sortie horizontaux (10) ou verticaux (10bis).

2. Machine automatique (1) de nettoyage externe de cassettes histologiques noyées dans de la paraffine selon la revendication 1, dans laquelle le dispositif de préhension (7) est configuré pour porter, après réception des coordonnées d'orientation de la cassette (3) du système d'affichage (4), son axe en position centrale par rapport à la cassette (3) et est orienté pour respecter sa position.
